# EUROPEAN PATENT APPLICATION

(11) **EP 4 847 585 A1**
(43) Date of publication of application: **02.12.2026**
(21) Application number: 26159410.5
(22) Date of filing: 18.02.2026
(51) Int. Cl.: C10B 53/02, C10B 53/07, C10B 53/08, C10L 5/36, B09B 3/32, C10L 5/08, C10L 5/46, C10L 5/40, B03B 9/06, B09B 3/40

(54) **METHOD AND APPARATUS FOR THE USE OF SRF FROM WASTE IN THE FORM OF PELLETS FOR REDUCING INPUT OXYGEN IN THE PYROLYSIS PROCESS**

(30) Priority: 29.05.2025 CZ 20250234
(71) Applicant: Henry Gas a.s., 11000 Praha 1 (CZ)
(72) Inventor: Matyás, Radek, 50012 Hradec Králové (CZ); Krejzek, Jan, 70800 Ostrava (CZ)
(74) Representative: Jirotkova, Ivana

(57) **Abstract**

The invention relates to a method of processing solid recovered fuel (SRF) for combustion, involving the sorting of waste and processing it into flakes, wherein their average bulk density is ρ_{f} = 130 kg/m³. The flakes from the sorted solid recovered fuel are compacted into pellets with a bulk density of pellets from ρₚₘᵢₙ = 455 kg/m³ to ρₚₘₐₓ = 650 kg/m³ at a pressure of 22 Mpa (220 bar) and an outlet temperature of 90°C, wherein a further step of processing is pyrolysis.

## Description

### Technical Field

The innovation consists in using SRF (solid recovered fuel) in the form of pellets (hereinafter also as "pellets") instead of commonly used flakes, which leads to an improvement of bulk handling properties of the input material fed to the pyrolysis process, a reduction of oxygen access by 39.8% to 63.5% and thereby an increase of efficiency of the reductive pyrolysis process. For this method of innovation, it is necessary to introduce a technological innovation of waste processing consisting in supplementing the process of waste sorting lines with a subsequent stage of mechanical compression of the waste by pelletization.

### Background Art

The sorting of waste from households, businesses, and industry mainly involves the separation (sorting) of materials such as plastic, paper, glass, metals, textiles, biowaste, etc., which can be further traded as commodities. This sorted waste also produces a so-called undersize fraction (rejects), a further unusable portion from which solid recovered fuel (SRF) is produced.

Such treated waste, further usable for production of solid recovered fuels, is subsequently crushed, usually by a primary crusher and a secondary crusher, to a required fraction. From such treated waste there are separated ferrous and non-ferrous metals, light and heavy fractions (e.g. glass, aggregates and the like) and biowaste. Sorting itself and mechanical treatment of waste therefore includes several technological processes which are described in more detail below:

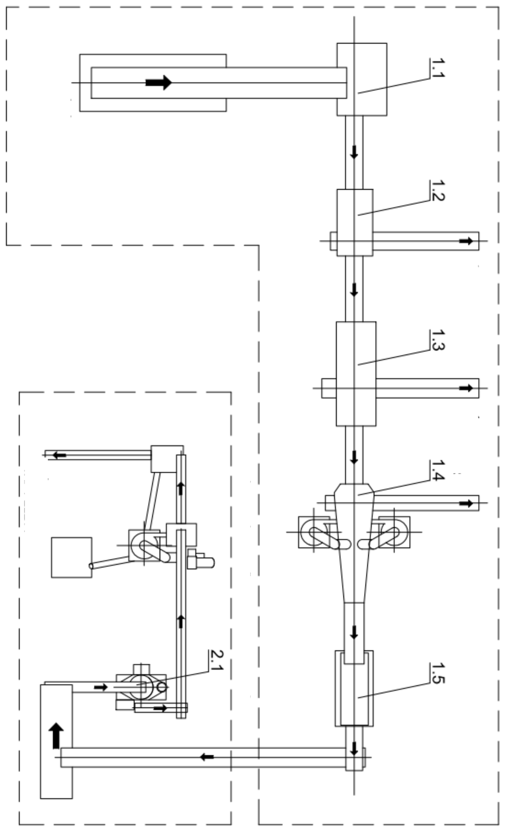

### Primary shredding of waste [Fig. 1 - item 1.1]

Primary shredders crush the treated waste to the required fraction (usually below 450 - 500 mm), which are further processed on secondary shredders.

### Separation of metals from waste [Fig. 1 - item 1.2]:

The waste is further conveyed through magnetic metal separators (ferrous metals) or eddy-current metal separators (non-ferrous metals).

### Separation of the biocomponent from waste [Fig.1 - item 1.3]:

The waste then passes through vibrating screens, where the biological component is further sorted from the waste.

### Separation of light particles [Fig. 1 - item 1.4]:

The separation of light and heavy fractions is a key step in the waste sorting process, allowing for the efficient separation of materials based on different physical properties such as density, size or aerodynamic properties.

### Secondary shredding of waste [Fig. 1 - item 1.5]:

Secondary shredders are installed at the end of the waste sorting lines and further reduce the size of the light waste particles to the required finer fraction. Secondary shredders are often high-speed and use a higher rotational speed for finer shredding. They can have a design with multiple cutting shafts, hammers, or blades. The output particles tend to be finer up to 50 mm.

The output product of the waste sorting line is the SRF product in the form of flakes (hereinafter also referred to as "flakes") from sorted waste in a mechanically modified state in the form of a product commodity. The particle size of SRF from sorted plastic, wooden, paper, textile or rubber waste in the form of flakes is 95% d95= approx. 30 mm. The application of this product from waste is mainly energy recovery as fuel for incinerators or input material for pyrolysis and gasification plants.

### Disadvantages of known solutions

For use in the pyrolysis process, crushed SRF from sorted waste in the form of flakes is less efficient than SRF in the form of pellets. As an input material to pyrolysis, its volume consists of 86.3% air. In this way, undesirable oxygen enters pyrolysis processes and causes the degradation of the pyrolysis output products. The bulk density of this material is approximately 130 kg/m³ depending on its composition and moisture.

### Description of alternative embodiments of mechanical compression

Briquetting is a process of pressing waste into larger, compact blocks (briquettes) than pellets. This process is less demanding on the input size of the material and often allows the processing of wetter or bulkier waste. However, from the point of view of reducing the oxygen content in the input material and the construction of pyrolysis reactors, where the material is shifted by screw or piston conveyors, it seems inappropriate.

In the extrusion process, the material is pressed and heated at the same time, which changes its structure. The resulting product can have different shapes (rods, strips, granules) according to requirements. This process is suitable for plastics, for example. From the point of view of processing, the reduction of the oxygen content in the input material seems to be suitable, however, this process is not applicable for waste treatment.

### Summary of Invention

At present, SRF is commonly used in the form of flakes of fraction size in a percentage share of 95% d95= approx. 30 mm with a bulk density depending on composition and moisture of approximately ρ_{f}=130 kg/m³. When handling this material, uneven settling occurs in a hopper creating air gaps that make up 86.3% of the volume, which contain undesirable oxygen. This negatively affects the SRF pyrolysis process and reduces quality of output products by their oxidation.

The proposed improvement addresses these shortcomings by replacing SRF in the form of flakes with SRF in the form of pellets with a diameter of d = 6 to 10 mm and a length of I = 10 to 30 mm with a bulk density from ρₚₘᵢₙ=455 kg/m³ to ρₚₘₐₓ=650 kg/m³ according to the pellet compression ratio (which is the ratio of I/d, i.e. the length and diameter of the pressing channel on the die, details in the description of the pelletizing press). The compaction factor of flake SRF into a pellet is fₚₘᵢₙ=3.5 to fₚₘₐₓ=5 times the bulk density of SRF in flake form, which is dependent on the compression ratio. This significantly reduces the volume of air gaps in the input material of the pyrolysis process, thereby reducing the percentage of oxygen in the pyrolysis process by 39.8% to 63.5%.

### Brief Description of Drawings

Figure 1 shows an automated waste sorting line supplemented by mechanical compression of the material by pelletization.

### Examples

The proposed technological improvement consists in supplementing the current known solution of sorting and mechanical treatment of waste (SRF) with a subsequent stage of waste treatment by mechanical compression by pelletization.

The unusable portion of the sorted waste passes through the primary shredder **1.1,** through the metal separator **1.2,** the biocomponent separator **1.3** and the light particle separator **1.4** to the secondary shredder **1.5,** from which SRF in the form of flakes exits.

The flakes are then pelletized in a pelletizing press. **2.1**

The press is designed such that a compression die is fixed to the machine frame and rollers rotate above it. The pressing unit further consists of several key components, including a star-shaped roller holder, an outer casing, a pair of main electric motors, a gearbox equipped with a lubrication mechanism, and a hydraulic unit which ensures pressing force of the star-shaped roller holder with rollers against the compression die. The die channels are made with a ratio of length "I" to the diameter of the hole in the die "d" in the range I/d = 6-10. The channels are provided, at the inlet of pressed material into the channel, with a conical lead-in with an angle of 60° to a depth of 2-4 mm depending on the diameter of the hole in the die. The temperature of the input material at the inlet is ambient temperature. The temperature of the pellet at the outlet of the pelletizing press is 90°C, then it is cooled and deburred. Cooling takes place in a vertical cooler, from which the pellet is further conveyed to a vibrating screen, where the pellet is freed of burrs and dust.

Composition of the pellet from waste:
- Polymer-based waste means in particular, but not exclusively: Polyethylene (low-density polyethylene, high-density polyethylene), Polyamide, Polyethylene terephthalate, Polypropylene, Polystyrene, Acrylonitrile butadiene styrene, Natural rubber, Nitrile butadiene rubber, Styrene-butadiene rubber, Ethylene-propylene-diene rubber.
- Wood-based waste means in particular, but not exclusively: solid wood, sawdust, particleboard, pressed chipboard, cork, paper, cardboard, cardboard.
- Textile-based waste means fibres in particular, but not exclusively: cotton, flax, wool, silk, coconut, hemp or the above-mentioned polymer fibres.
- Pelletizing pressure = 180 to 250 bar
- Temperature of input material before pelletization - 20°C (ambient temperature)
- Temperature of pellet material after pelletization - 70-90°C

| Material composition of waste pellets: | Example 1 % | Example 2 % | Example 3 % |
|---|---|---|---|
| Polymer-based waste (from 37% to 85%) | 70 | 37 | 85 |
| Wood-based waste (from 14% to 60%) | 25 | 60 | 14 |
| Textile-based waste (from 1% to 20%) | 5 | 20 | 1 |

Calculation of O₂ concentration reduction in the input material of the pyrolysis process:
- Volumetric density of the SRF mixture (without air gaps) ρ_{V}=946 kg/m³
- Calculation of porosity ε_{f} (free space between particles) for SRF in flake form: ${ε}_{f} = 1 - \frac{{ρ}_{f}}{{ρ}_{V}} = 1 - \frac{130}{946} = 0.863$ (86.3% of the volume in flakes is air)
- Calculation of porosity εₚ (free space between particles) for SRF in pellet form: ${ε}_{pmax} = 1 - \frac{{ρ}_{f} . {f}_{pmin}}{{ρ}_{V}} = 1 - \frac{130 ⋅ 3 , 5}{946} = 0.519$ (51.9% of the volume in pellets is air) ${ε}_{pmin} = 1 - \frac{{ρ}_{f} . {f}_{pmax}}{{ρ}_{V}} = 1 - \frac{130 ⋅ 5}{946} = 0.313$ (31.3% of the volume in pellets is air)
- Calculation of oxygen volume V_{O2,f} in the hopper at the concentration of k_{O2}=21% in the air for SRF in flake form: ${V}_{O 2 , f} = {ε}_{f} ⋅ {k}_{O 2} = 0.863 ∗ 0.21 = 0.181$ (18.1% of the volume in SRF is oxygen)
- Calculation of oxygen volume V_{O2,p} in the hopper at the concentration of k_{O2}=21% in the air for SRF in pellet form: ${V}_{O 2 , pmax} = {ε}_{pmax} ⋅ {k}_{O 2} = 0.519 ∗ 0.21 = 0.109$ (10.9% of the volume in the pellets is oxygen with a compaction factor fₚₘᵢₙ= 3.5) ${V}_{O 2 , pmin} = {ε}_{pmin} ⋅ {k}_{O 2} = 0.313 ∗ 0.21 = 0.066$ (6.6% of the volume in the pellets is oxygen with a compaction factor fₚₘₐₓ= 5)
- Determination of the limit % value of oxygen reduction "r" when using pellets.
- ${r}_{min} = 1 - \frac{{V}_{O 2 , pmax}}{{V}_{O 2 , f}} = 1 - \frac{0.109}{0.181} = 0.398$ (oxygen reduction when using pellet with compaction factor fₚₘᵢₙ = 3.5 by 39.8%)
- $rmax = 1 - \frac{{V}_{O 2 , p}}{{V}_{O 2 , f}} = 1 - \frac{0.066}{0.181} = 0.635$ (oxygen reduction when using pellet with compaction factor fₚₘₐₓ = 5 by 63.5%)

**The above calculation shows that when using SRF in pellet form, compared to SRF in flake form, 39.8% to 63.5% less oxygen enters the pyrolysis process.**

Table showing the effect of oxygen reduction on pyrolysis products for material composition example 1.
- Flake 18.1% O₂: ρ_{f}=130 kg/m³, d₉₅=30 mm
- Pellet 10.9% O₂: ρₚₘᵢₙ=455 kg/m³, d=10mm, I=10-30mm
- Pellet 6.6% O₂: ρₚₘₐₓ=650 kg/m³, d=6, I=10-30mm

| **Category** | **Component** | **Flake 18.1% O₂** | **Pellet 10.9 % O₂** | **Pellet 6.6% O₂** |
|---|---|---|---|---|
| Gaseous product | H₂ | 22.4 | 26.2 | 28.5 |
| | CO | 17.8 | 14.7 | 13.0 |
| | CO₂ | 31.7 | 26.2 | 23.2 |
| | CH₄ | 13.7 | 16.0 | 17.4 |
| | C₂H₄ | 4.7 | 5.5 | 6.0 |
| | C₂H₆ | 3.9 | 4.6 | 5.1 |
| | C₃H₆ | 3.8 | 4.5 | 4.9 |
| | Other | 2.0 | 2.3 | 1.9 |
| Liquid product | Oil | 57.7 | 65.1 | 69.3 |
| | Aqueous | 42.3 | 34.9 | 30.7 |
| Solid product | Carbon | 45.6 | 52.8 | 55.8 |
| | Ash | 54.4 | 47.2 | 44.2 |
| Product balance | Gaseous | 36.4 | 42.7 | 44.1 |
| | Liquid | 35.9 | 33.0 | 32.9 |
| | Solid | 27.7 | 24.3 | 23.0 |

### Description of advantages of the presented solution compared to the known prior art in the given field

Reducing oxygen access by 39.8% to 63.5% to the pyrolysis process due to the use of SRF in the form of pellets increases the quality of output products and reduces formation of secondary undesirable substances:
- Less CO₂ and CO are formed in the gas product instead of energy-richer reducing gases such as H₂ and CH₄, thereby energy value of the gaseous product increases and the share of emission gases decreases.
- In the liquid product, oxygen increases the concentration of oxygenated organic compounds (phenols, ketones, carboxylic acids), which reduce the quality of pyrolysis oil.
- In the solid product, due to oxidation, energy value of the carbonaceous part is reduced, and ash production is increased.

This improvement can be easily applied to existing pyrolysis plants without the need for major modifications. Usable for systems with hoppers with screw as well as piston feeding. Suitable for rotary as well as knife-type airlocks.

The higher bulk density of pellets (455 to 650 kg/m³) compared to flakes (130 kg/m³) increases the input energy to processes such as pyrolysis, gasification or direct combustion.

During the pelletizing process, the SRF input material from the sorted waste in the form of flakes is dried by process heat and then the content of the plastic component of the waste is melted and encapsulated. By encapsulating the pellets through the melting of plastic in the mixed waste mixture, it coats the other components (e.g., organic waste, paper, etc.). Due to the resulting plastic coating, the pellet has significantly better moisture resistance, however this property is dependent on the quantitative amount of plastic in the mixed waste. In particular, the wood and textile component is thereby less prone to further water uptake, which prolongs their storability and prevents biological degradation. In the presented solution, 70% of the material, which is similar in composition to example no. 1, will also work with a lower probability for examples nos. 2 and 3.

Due to the size and density (diameter d = 6 to 10 mm and length I = 10 to 30 mm) of SRF in pellet form, sticking, clumping, or other adhesion to the mechanical parts of pyrolysis machines is prevented and thereby it contributes to longer and smoother operation, especially in continuous pyrolysis. The pellets have a regular shape, which simplifies their dosing, conveying and use in automated fuel, pyrolysis, and gasification systems.

Due to its compact dimensions and significantly increased bulk density, which is 3.5 to 5 times higher (comparing flakes to pellets), it facilitates storage. Further, 3.5 to 5 times smaller volume enables more efficient logistics and reduces transport costs. When considering road transport with a semi-trailer with a maximum load capacity of 24 t and a volume of 90 m³, the number of necessary transports using material in the form of pellets is reduced by 1.6 times. The production of CO₂ emissions from freight transport will also be reduced by approximately the same ratio.

From a chemical point of view, SRF in pellet form is more homogeneous compared to only milled or crushed waste.

## Claims

1. A method of processing solid recovered fuel (SRF), involving sorting of waste and processing it into flakes with an average bulk density of ρ_{f} = 130 kg/m³, **characterized in that** the flakes from the sorted solid recovered fuel are compacted into pellets with a bulk density of ρₚₘᵢₙ = 455 kg/m³ to ρₚₘₐₓ = 650 kg/m³ at a pressure of 22 MPa (220 bar) and an outlet temperature of 90°C, wherein a further processing step is pyrolysis, wherein a compaction factor of the SRF pellet is fₚₘᵢₙ=3.5 to fₚₘₐₓ=5 times the bulk density of SRF in flake form, for reducing oxygen representation during pyrolysis.

2. The method according to claim 1, **characterised in that** solid recovered fuel (SRF) is obtained by mechanical sorting of waste, wherein the waste is selected from the group comprising plastic, wooden, paper, textile or rubber waste.

3. The method according to claims 1 or 2, **characterised in that** the pellets have a diameter d = 6 to 10 mm and a length I = 10 to 30 mm.
